# EUROPEAN PATENT APPLICATION

(11) **EP 1 785 396 A1**
(43) Date of publication of application: **16.05.2007**
(21) Application number: 05077552.7
(22) Date of filing: 09.11.2005
(51) Int. Cl.: C01F 11/12, C01F 5/14, C01B 33/187

(54) **Process for preparing a metal hydroxide**

(71) Applicant: Nederlandse Organisatie voor Toegepast-Natuurwetenschappelijk Onderzoek TNO, 2628 VK Delft (NL)
(72) Inventor: Brouwer, Jan Peter, 7312 SL Apeldoorn (NL)
(74) Representative: Winckels, Johannes Hubertus F.

(57) **Abstract**

The invention provides a process for preparing a metal hydroxide comprising the steps of:
(a) providing particles of a metal silicate;
(b) mixing the particles with a mineral acid solution to obtain a slurry which comprises precipitated silica;
(c) separating the precipitated silica from the slurry to obtain a remaining solution;
(d) increasing the pH of the remaining solution to such an extent that a metal hydroxide is formed; and
(e) separating the metal hydroxide so obtained from the remaining solution.

## Description

The present invention relates to a novel process for preparing metal hydroxides.

Metal hydroxides are an important class of chemical compositions since they are used in many different industrial applications and as sources from which metal compositions can be prepared that are much used in industry, such as metal oxides, metal chlorides and metal sulphates. Metal hydroxides are, for instance, the most commonly used family of halogen free flame retardants.

A variety of processes is known to prepare metal hydroxides. Suitable examples include the hydration of the corresponding metal oxide, spray-roasting of the corresponding metal chloride, and treatment of a solution of the corresponding metal chloride with a different metal oxide or hydroxide.

The aim of the present invention is to provide a novel and effective process for the preparation of metal hydroxides.

Surprisingly, it has been found that this can be realised by treating metal silicate particles with a mineral acid solution to obtain a slurry with precipitated silica, and subsequently increasing the pH of the remaining solution from which the precipitated silica has been removed.

Accordingly, the present invention relates to a process for preparing a metal hydroxide comprising the steps of:
(a) providing particles of a metal silicate;
(b) mixing the particles with a mineral acid solution to obtain a slurry which comprises precipitated silica;
(c) separating the precipitated silica from the slurry to obtain a remaining solution;
(d) increasing the pH of the remaining solution to such an extent that a metal hydroxide is formed; and
(e) separating the metal hydroxide so obtained from the remaining solution.

The present invention is attractive since metal hydroxides of high purities can be prepared, whereas at the same time silica can effectively be produced.

The mineral acid solution to be used in step (a) suitably comprises sulphuric acid and/or nitric acid. Preferably, the mineral acid solution in step (b) comprises nitric acid.

Preferably, the mineral acid solution to be used in step (b) has a concentration in the range of from 0.01 to 15 M, more preferably a concentration in the range of from 0.5 to 5 M. Preferably, the pH should not exceed a value of 1.5 at the end of step (b), in order to prevent silica gel formation and to allow for good filterability.

In step (d) the pH of the remaining solution is increased to such an extent that the metal hydroxide is formed.

Suitably, in step (d) the pH is increased to a value in the range of from 8-13. Preferably, in step (d) the pH is increased to a value in the range of from 9-11 in case magnesium silicate is used in step (a). When calcium silicate is used in step (a), the pH is preferably increased to a value in the range of from 11-13. Other metal silicates used in step (a) may require a different pH in step (d) to cause precipitation of the corresponding metal hydroxide, as will be appreciated by one skilled in the art.

In step (d), the pH of the remaining solution is increased by the addition of a base. Any suitable base can be used for this purpose, e.g. an ammonium hydroxide solution, an alkali-metal solution, an alkali-carbonate solution, a solution of a phosphate salt, an acetate solution and others, whereby it should be noted that suitable bases are not limited to these examples. Preferably, in step (d) the pH is increased by adding an ammonium hydroxide solution, an alkali-metal hydroxide solution or ammonia gas to the remaining solution.

Suitable alkali-metal hydroxide solutions include sodium hydroxide and potassium hydroxide.

Preferably, the alkali-metal hydroxide comprises potassium hydroxide.

More preferably, the pH is increased in step (d) by adding ammonia gas or an ammonium hydroxide solution to the remaining solution.

In a particular attractive embodiment of the present invention also carbon dioxide is added to the remaining solution in step (d). In that way carbon dioxide can be captured from a gas stream and at the same time be converted into a solid carbonate.

Preferably, the metal silicate to be used in accordance with the present invention comprises magnesium silicate or calcium silicate. More preferably, the metal silicate comprises olivine and/or serpentine.

Suitably, the precipitated silica obtained in step (c) can be subjected to a washing treatment to obtain a high quality silica. The solution used for such a washing treatment can suitably be added to the remaining solution as obtained in step (c).

Step (d) can attractively be carried out stepwise, which has the advantage that a metal hydroxide can be obtained of a high purity. For instance, the pH can first be increased in step (d) to a value in the range of 2-4. At such a pH, Fe(II) ions present in the remaining solution, originating from the metal silicate particles used in step (a), will be oxidised into Fe(III) ions, whereby ferric hydroxide will precipitate which can subsequently be removed from the remaining solution and used in, for instance, the production of steel. In case nitric acid is used in step (a), nitrate ions can be allowed to act as an oxidant for iron oxidation, otherwise a suitable oxidant such as air can be introduced.

Subsequently, the pH can further be increased in step (d) to a pH in the range 7-8, which ensures that hydroxides of heavy metals originally present as contaminants in the metal silicate particles, will be formed which in turn can be removed from the remaining solution. Then, the pH will be increased to such an extent that the metal hydroxide is formed.

In another attractive embodiment of the present invention in step (e) a salt containing solution is obtained from the remaining solution by adding to the latter an acid solution in order to neutralize the excess amount of base. The acid solution suitably comprises sulphuric acid and/or nitric acid. Preferably, the acid solution comprises nitric acid. This embodiment is especially attractive when in step (d) the pH is increased by adding to the remaining solution an ammonium hydroxide or ammonium gas because then ammonium sulphate and/or ammonium nitrate solution can be obtained which subsequently can attractively be used in the preparation of fertilizers, in particular magnesium containing fertilizers.

Hence, in a particular attractive embodiment the present invention relates to a process for preparing a metal hydroxide and in addition an ammonium sulphate and/or ammonium nitrate solution, which process comprises the steps of:
(a) providing particles of a metal silicate;
(b) mixing the particles with a mineral acid solution to obtain a slurry which comprises precipitated silica;
(c) separating the precipitated silica from the slurry to obtain a remaining solution;
(d) increasing the pH of the remaining solution to such an extent that a metal hydroxide is formed by adding an ammonium hydroxide solution or ammonium gas to the remaining solution;
(e) separating the metal hydroxide so obtained from the remaining solution; and
(f) adding a sulphuric solution and/or a nitric acid solution to the remaining solution obtained in step (e), thereby forming an ammonium sulphate and/or ammonium nitrate solution.

Preferably, only a nitric acid solution is used, bringing about the forming of an ammonium nitrate solution in step (f).

The particle size of the metal silicate particles to be used in accordance with the present invention may vary broadly. Suitably, the particles of the metal silicate have an average particle size of less than 1 mm. Preferably, the particles of the metal silicate have an average particle size of less than 0.5 mm. More preferably, the particles have an average particle size in the range of from 0.1 to 0.5 mm.

The metal hydroxides, especially magnesium hydroxide, obtained in accordance with the present invention can suitably be used to remove carbon dioxide from a carbon dioxide containing amine, ammonia, amino acid salt, or alkali-metal carbonate solution. In such a process the carbon dioxide containing solution is contacted with the metal hydroxide obtained in accordance with the present invention, whereby carbon dioxide reacts with the metal composition to form a precipitated metal carbonate. Subsequently, the precipitated metal carbonate so obtained is removed from the solution.

Such a carbon dioxide removing process is especially of importance in view of today's society concerns regarding the possible environmental consequences of the rapidly increasing levels of carbon dioxide which are generated in power generation, oil refinery processes and other industrial processes.

Such a process is especially attractive since it is much more attractive in terms of low energy consumption than conventionally used chemical absorption processes. Moreover, the metal carbonate obtained is very stable and can safely be stored. On the other hand, the metal carbonate can advantageously be used in further processes, for example, the production of fertilizers, in particular magnesium based fertilizers.

The magnesium hydroxide prepared with the present invention can also suitably be used in the pulp and paper industry, as well as for the removal of sulphur dioxide from industrial waste gases and for treating waste water. It can also serve as a source for producing magnesium oxide.

## Claims

1. A process for preparing a metal hydroxide comprising the steps of:
(a) providing particles of a metal silicate;
(b) mixing the particles with a mineral acid solution to obtain a slurry which comprises precipitated silica;
(c) separating the precipitated silica from the slurry to obtain a remaining solution;
(d) increasing the pH of the remaining solution to such an extent that a metal hydroxide is formed; and
(e) separating the metal hydroxide so obtained from the remaining solution.

2. A process according to claim 1, wherein the mineral acid solution in step (b) comprises sulphuric acid and/or nitric acid.

3. A process according to claim 2, wherein the mineral acid solution in step (b) comprises nitric acid.

4. A process according to any one of claims 1-3, wherein the mineral acid solution in step (b) has a concentration in the range of from 0.01 M to 15 M.

5. A process according to any one of claims 1-3, wherein the mineral acid solution in step (b) has a concentration in the range of from 0.5 M to 5 M.

6. A process according to any one of claims 1-5, wherein in step (d) the pH is increased to a value in the range of from 8-12.

7. A process according to claim 6, wherein in step (d) the pH is increased to a value in the range of from 9-11.

8. A process according to any one of claims 1-7, wherein in step (d) the pH is increased by adding an ammonium hydroxide solution, an alkali-metal hydroxide solution or ammonia gas to the remaining solution.

9. A process according to claim 8, wherein in step (d) the pH is increased by adding ammonia gas to the remaining solution.

10. A process according to claim 9, wherein in step (d) also carbon dioxide is added to the remaining solution.

11. A process according to any one of claims 1-10, wherein the metal silicate comprises magnesium silicate and/or calcium silicate.

12. A process according to claim 8, wherein the metal silicate comprises olivine and/or serpentine.

13. A process according to any one of claims 1-12, wherein from the remaining solution obtained in step (e) a salt containing solution is obtained by adding an acid solution to said remaining solution.

14. A process according to claim 13, wherein the acid comprises sulphuric acid and/or nitric acid.

15. A process for preparing a metal hydroxide according to claim 13 or 14 comprising the steps of:
(a) providing particles of a metal silicate;
(b) mixing the particles with a mineral acid solution to obtain a slurry which comprises precipitated silica;
(c) separating the precipitated silica from the slurry to obtain a remaining solution;
(d) increasing the pH of the remaining solution to such an extent that a metal hydroxide is formed by adding an ammonium hydroxide solution or ammonium gas to the remaining solution;
(e) separating the metal hydroxide so obtained from the remaining solution; and
(f) adding a sulphuric acid solution and/or a nitric acid solution to the remaining solution obtained in step (e), thereby forming an ammonium sulphate and/or ammonium nitrate solution.

16. A process according to claim 14 or 15, wherein the acid comprises nitric acid.

17. A process according to any one of claims 1-16, wherein the particles of the metal silicate have an average particle size of less than 1 mm.

18. A process according to claim 17, wherein the particles of the metal silicate have an average particle size of less than 0.5 mm.
